# EUROPEAN PATENT SPECIFICATION

(11) **EP 2 263 393 B1**
(45) Date of publication and mention of the grant of the patent: **16.10.2013**
(21) Application number: 08873546.9
(22) Date of filing: 22.10.2008
(51) Int. Cl.: H04W 8/08, H04W 48/00

(54) **SYSTEMS AND METHODS OF REDUCING SIGNALING IN A NETWORK HAVING A DATABASE SERVER**
SYSTEME UND VERFAHREN ZUR SIGNALISIERUNGSVERRINGERUNG IN EINEM NETZ MIT EINEM DATENBANKSERVER
SYSTÈMES ET MÉTHODES RÉDUISANT LA SIGNALISATION DANS UN RÉSEAU COMPORTANT UN SERVEUR DE BASE DE DONNÉES

(30) Priority: 27.03.2008 US 39830 P
(43) Date of publication of application: 22.12.2010
(73) Proprietor: Telefonaktiebolaget L M Ericsson (publ), 164 83 Stockholm (SE)
(72) Inventor: MIKLÓS, György, H-2096 Üröm (HU); ROMMER, Stefan, S-426 74 Västra Frölunda (SE); WALKER, John, Michael, NL-2592 Den Haag (NL)
(74) Representative: Vejgaard, Christian
(86) International application number: PCT/EP2008/064228
(87) International publication number: WO 2009/118056

(56) References cited:
- HUAWEI: "S2-073996 Clarification on PGW address storage for Non-3GPP Access" 3GPP TSG SA WG2 ARCHITECTURE SA2#60, [Online] 2 October 2007 (2007-10-02), XP002517652 Kobe, Japan, 8-12 October 2007 Retrieved from the Internet: URL:http://www.3gpp.org/ftp/tsg_sa/WG2_Arc h/TSGS2_60_Kobe/Docs/> [retrieved on 2009-03-03]
- ERICSSON: "S2-074809 Registration of Selected PDN GW address in HSS with attach in non-3GPP" 3GPP TSG SA WG2 ARCHITECTURE SA2#60, [Online] 23 October 2007 (2007-10-23), XP002517653 Kobe, Japan, 8-12 October 2007 Retrieved from the Internet: URL:http://www.3gpp.org/ftp/tsg_sa/WG2_Arc h/TSGS2_60_Kobe/Docs/> [retrieved on 2009-03-03]
- 3GPP: "3rd Generation Partnership Project;Technical Specification Group Services and System Aspects;General Packet Radio Service (GPRS) enhancements for Evolved Universal Terrestrial Radio Access Network (E-UTRAN) access(Release 8)" 3GPP DRAFT; 23401-800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG3_Security\TSGS3_LI\2008_28_Sophi a\Docs, no. Sophia; 20080205, 13 December 2007 (2007-12-13), XP050282132 cited in the application

## Description

### TECHNICAL FIELD

The present invention relates to reducing signalling in a network having a database server.

### BACKGROUND

Current packet core architecture defined in Section 23.060 of the Third Generation Partnership Project (3GPP) standard allows for optimizing signalling between a Serving General Packet Radio Service (GPRS) Support Node (SGSN) and a central database server (e.g., a home subscriber server (HSS)). When a subscription profile is downloaded from the HSS to the SGSN, the SGSN may skip HSS Signalling during a user equipment (UE) Attach procedure and use a subscription context already stored in the SGSN. Also, a Detach procedure does not involve HSS Signalling. The SGSN may keep the subscription context for a period of time. When the SGSN drops the UE's context, the SGSN performs a Purge procedure with the HSS. In this manner, it is possible that after a first Attachment for a given UE, the UE may perform multiple Attach/Detach procedures without mandating the SGSN to perform HSS signalling.

The 3GPP System Architecture group (SA2) developed procedures for handover between 3GPP access and non-3GPP access that are being defined in the 3GPP Technical Specification (TS) Sections 23.401 and 23.402. This involves storing a packet data network (PDN) gateway (GW) identity in the HSS so that the same PDN gateway can be used before and after handover. This allows session continuity by keeping an Internet Protocol (IP) address for the user. Storing the PDN gateway identity in HSS, however, requires additional signalling with the HSS and it is not clear how an optimized behaviour specified in the current packet core architecture may be retained.

Another problem with current systems is that the systems require that a newly selected PDN gateway address be stored in the HSS for a multi-access user that may handover between a 3GPP address and a non-3GPP address. This, however, requires HSS signalling during an initial Attach procedure as well as during the procedure to establish additional PDN connections in a 3GPP access setting. An existing solution to reduce this signalling is that the PDN gateway address might not be removed from the HSS during a Detach procedure in a 3GPP access setting.

This solution, however, is problematic because once a UE has detached, the PDN gateway information stored in HSS is outdated. Such outdated information may cause problems for an operator to maintain user data current and handle error cases properly. Also, when the UE performs an Attach procedure in a non-3GPP access setting, it may not be possible to decide, based on UE information, whether the UE is performing a handover or an initial attach procedure. Therefore, an outdated PDN gateway identity may lead to a UE using an invalid PDN gateway when another PDN gateway with better transmission properties could have been assigned. Furthermore, when a UE performs a handover from 3GPP access to non-3GPP access, the non-3GPP access may receive outdated PDN GW identity information from the HSS causing problems when the non-3GPP system establishes the connections based on the outdated PDN gateway identity information.

These and other disadvantages of current systems exist.

The document "S2-073996 Clarification on PGW address storage for Non-3GPP Access" to Huawei describes that PGW address(es) is stored in HSS for inter-access mobility between 3GPP Access and Non-3GPP Access. It discuss PGW address storage in case of intra NON-3GPP Access Mobility and proposes that the 3GPP AAA Server should be the secondary entity to store the PDN GW address for the purpose of intra Non-3GPP Access mobility and the related procedures about how to support intra Non-3GPP Access mobility by storing the selected PDN GW's address in the 3GPP AAA server.

The document "S2-074809 Registration of Selected PDN GW address in HSS with attach in non-3GPP" to Ericsson describes why a selected PDN GW address should be stored in the HSS and proposes message flows to store the PDN GW address in the HSS during Attach procedure.

### SUMMARY

In one aspect, the invention provides a system and method for reducing signalling in a network having a database server (e.g., HSS signalling). Reduced HSS signalling may be achieved by not requiring a database client (e.g., a mobility management entity (MME), a serving general packet radio service (SGSN) support node, an authentication authorization accounting (AAA) server) to transmit a packet data network (PDN) gateway identifier (e.g., Internet Protocol (IP) address) to an HSS in response to the database client selecting a PDN gateway for a UE as a result of a UE attach procedure. If the PDN gateway identifier is not transmitted to the HSS, the HSS may acquire the PDN gateway identifier by querying the database client.

In another aspect, the system and method may require the database client to update the HSS with current PDN gateway identifying information during each attach procedure and/or during the opening and closing of a PDN connection if predetermined criteria concerning the UE are met. The predetermined criteria may be, for example, that the UE is capable of supporting multiple accesses technologies or the UE subscription allows the UE to use both 3GPP and non-3GPP access technologies or that specific non-3GPP access technologies are deployed in the network. In all other cases, for example, if the subscription allows only 3GPP access, the database client may not need to transmit PDN gateway identifiers to the HSS.

In some embodiments, a method in an apparatus for reducing database signalling includes the following steps: (1) selecting a gateway in response to an event; (2) determining whether to transmit a gateway identifier identifying the selected gateway to a central database ; and (3) indicating whether the gateway identifier has been transmitted to the central database . The determining step may include determining a likelihood of a change in access-technology-type. The method may also include receiving criteria to be used in the determining step of determining. The criteria may include any one or more of a device identity, terminal capability, UE location, subscriber profile, network configuration depending on operator policy, and user behaviour.

In other embodiments, a method in a network node includes: (1) receiving a request for a gateway identifier; (2) transmitting a gateway identifier to the central database in response to the request, wherein the gateway identifier identifies a gateway that provides a service to a user device; and (3) storing information indicating that the gateway identifier has been transmitted to the central database. The method may also include detecting a detach event associated with a user device and determining whether the gateway identifier has been transmitted to the HSS in response to the detach event. A message instructing the HSS to disassociate the gateway identifier from the user device may be sent to the HSS if a determination is made that the gateway identifier has been transmitted to the HSS.

In another aspect, the invention provides an apparatus for reducing central database signalling. In some embodiments, the apparatus includes a selecting module that selects a gateway in response to an event, a transmitting determining module that determines whether to transmit a gateway identifier identifying the selected gateway, and an indicating module configured to store information that indicates whether the gateway identifier has been transmitted to the central database. The determining module may determine a likelihood of a change in access-technology-type. The database client may also include criteria receiving module that receives criteria to be used by the determining module to determine whether a change in access-technology-type is likely. The criteria may include any one or more of a device identity, terminal capability, terminal location, subscriber profile, network configuration depending on operator policy, and user behaviour.

In some other embodiment a network node includes: a request receiving module configured to receive a request from a central database; a transmitting module configured to transmit a gateway identifier to the central database in response to the request, wherein the gateway identifier identifies a gateway in communication with a user device; and a storing module for storing an indicator indicating that the gateway identifier has been transmitted from the system to the central database. The network node may also include a detecting module that detects a detach event associated with a user device and a determining module that determines whether the gateway identifier has been transmitted to the HSS in response to the detach event. A message instructing the HSS to disassociate the gateway identifier from the user device may be sent to the HSS if a determination is made that the gateway identifier has been transmitted to the HSS.

According to the invention, HSS signalling is reduced thus decreasing a load of the HSS. This allows the same HSS to serve a higher number of users, allowing cost savings for an operator. The invention also allows optimizing HSS Signalling for users that are multi-access capable, for example, users that are allowed and capable of using non-3GPP technology access. The invention also reduces the risk that an HSS will provide inaccurate PDN gateway identity information (e.g., outdated information) to a database client.

The above and other aspects and embodiments are described below with reference to the accompanying drawings.

### BRIEF DESCRIPTION OF THE DRAWINGS

The accompanying drawings, which are incorporated herein and form part of the specification, illustrate various embodiments of the present invention and, together with the description, further serve to explain the principles of the invention and to enable a person skilled in the pertinent art to make and use the invention. In the drawings, like reference numbers indicate identical or functionally similar elements.

FIG. 1A is a high-level block diagram of a system according to some embodiments of the invention.

FIG. 1B is a high-level block diagram of a system according to some embodiments of the invention.

FIG. 2 is a flow chart demonstrating a process relating to home subscriber server signaling according to some embodiments of the invention.

FIG. 3 is a flow chart illustrating a process of applying criteria to home subscriber server signaling according to some embodiments of the invention.

FIG. 4 is a flow chart illustrating a process relating to home subscriber server signaling according to some embodiments of the invention.

FIG. 5 is a flow chart illustrating a process relating to home subscriber server signaling according to some embodiments of the invention.

FIG. 6 is a flow chart illustrating a process relating to home subscriber server signaling according to some embodiments of the invention.

FIG. 7 is a functional block diagram of a home subscriber server according to some embodiments of the invention.

FIG. 8 is another functional block diagram of a home subscriber server according to some embodiments of the invention.

FIG. 9 is a functional block diagram of a database client according to some embodiments of the invention.

FIG. 10 is another functional block diagram of the database client according to some embodiments of the invention.

### DETAILED DESCRIPTION

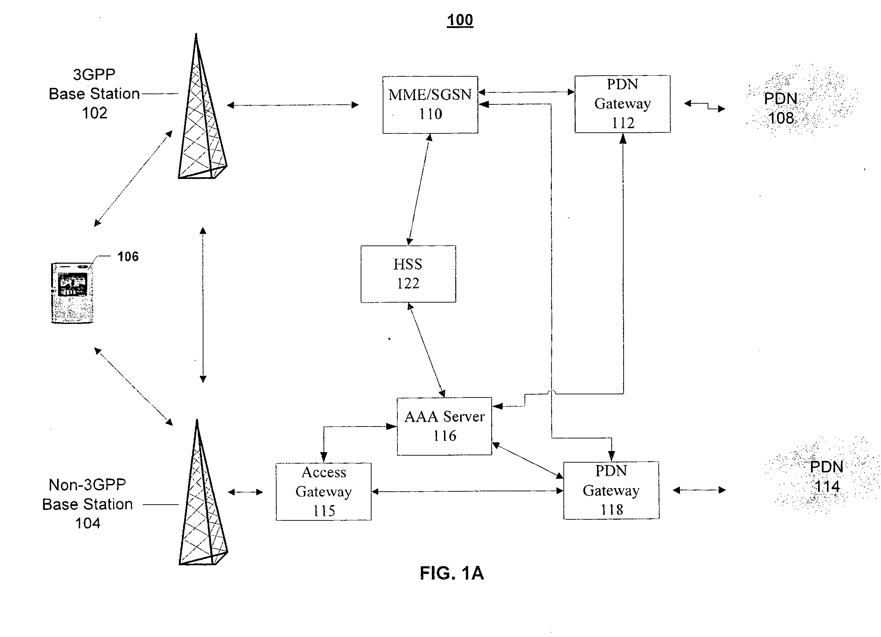

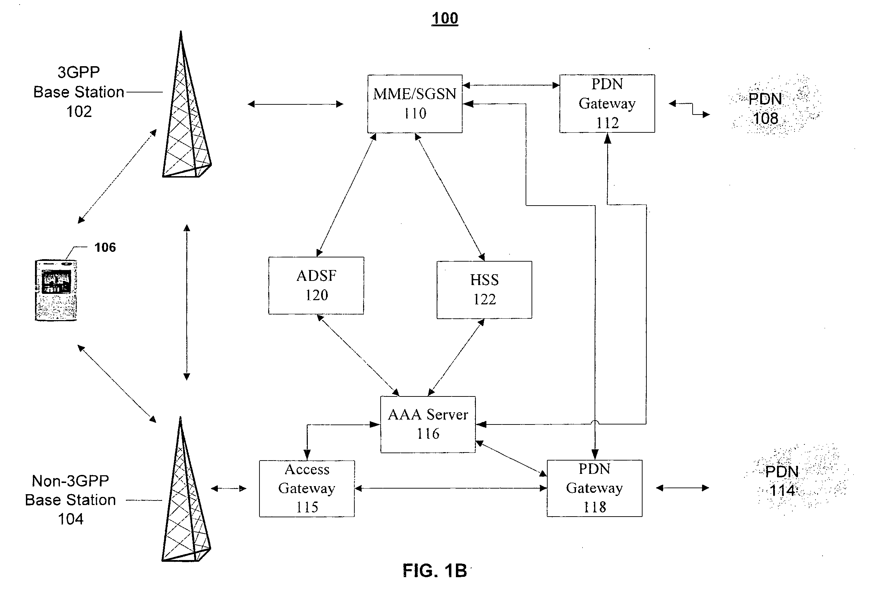

Referring to FIG. 1A, FIG. 1A illustrates a system 100 according to some embodiments of the invention. As illustrated in FIG. 1, system 100 includes a third generation partnership project (3GPP) base station 102 and a non-3GPP base station 104.

3GPP base station 102 and non-3GPP base station 104 may be configured to communicate with user equipment (UE) 106. 3GPP base station 102 may enable UE 106 to communicate with a PDN 108, 114 using a data base client 110 and a PDN gateway 112, 118. The database client may be, for example, a core network node, such as a mobility management entity (MME), a serving general packet radio service (GPRS) support node (SGSN). Non-3GPP base station 104 may enable UE 106 to communicate over a network 112, 114 using an access gateway 115, an authentication authorization accounting (AAA) server 116 and a gateway 112, 118. Gateway 112 and 118 may be the same gateway and PDN 108 and 114 may be the same PDN. System 100 also includes a home subscriber server 122 that communicates with the database clients 110 and 116.

Referring now to FIG. 1B, FIG. 1B illustrates system 100 according other embodiments of the invention. As shown in FIG. 1B, system 100 may also include an adaptive database signaling function (ADSF) 120. ADSF 120 may be a specific policy decision point which can be implemented in each database client (e.g., MME, SGSN or AAA server) or centralized in a central system such as, for example, a policy and charging rules function (PCRF). ADSF 120 facilitates switching communications from UE 106 that use a 3GPP network 108 to communications that use a non-3GPP network 114 and vice versa.

ADSF 120 may receive real-time information related to user mobility (e.g., if the UE is near a different access technology such as non-3GPP access technology and thus likely to handed over from base station 102 to base station 104), device capabilities indicated by the device itself, and user behavior and patterns (e.g., if the user often uses non-3GPP or 3GPP accesses given the choice) to determine whether a database client (e.g., MME, SGSN, AAA server) should update a HSS with new data (e.g., PDN gateway identifier). It may also use pre-configured information such as user profile, priorities assigned to certain types of users and operator policies in making this determination. ADSF 120 may also be used to instruct a database client to remove an entry from the HSS.

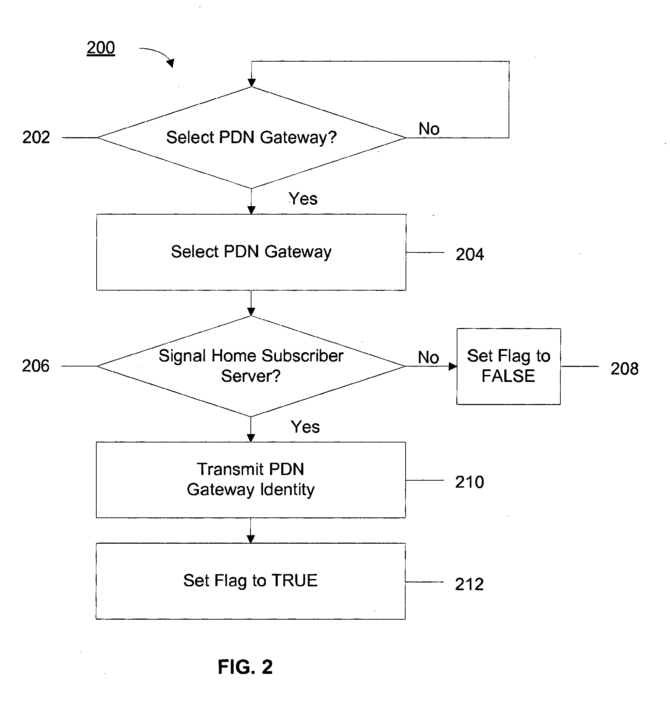

Referring now to FIG. 2, FIG. 2 is a flow chart illustrating a process 200 of reducing home subscriber server (HSS) signaling according to one embodiment of the invention. Process 200 may begin in step 202, where a determination is made regarding whether a packet data network (PDN) gateway must be selected. A new PDN gateway may be selected in the MME during an Attach procedure or UE requested PDN connectivity procedure. A PDN gateway may be selected in the SGSN during packet data protocol (PDP) context activation. When a PDN gateway is selected in the MME or SGSN, the MME or SGSN may determine that a PDN gateway identity need not be transmitted to the HSS to reduce HSS Signaling.

If a determination is made that a PDN gateway does not need to be selected, process 200 may remain at step 202. If a determination is made that a PDN. gateway must be selected, process 200 may select a PDN gateway in step 204.

After selecting the PDN gateway, process 200 may determine in step 206 whether an HSS should be signaled. If a determination is made that the HSS does not need to be signaled, in step 208, a flag in a database client may be set to FALSE indicating that the HSS has not been signaled. The MME/SGSN may maintain a flag (e.g., "PDN GW storage") in the UE context on a per PDN connection (i.e., per access point name (APN), Internet Protocol (IP) address, etc.) basis. The PDN gateway storage flag may be set to TRUE if the PDN gateway identity has been stored in the HSS, otherwise the flag may be set to FALSE.

For evolved universal terrestrial radio access network (EUTRAN), a PDN gateway is not used after performing a Detach procedure in the MME, or after performing a UE requested PDN disconnection procedure. For Global system for mobile (GSM) communications Edge Radio Access Network (GERAN) and Universal mobile telecommunications system (UMTS) terrestrial radio access network (UTRAN), a PDN gateway is not used after performing the PDP context deactivation procedure. If the PDN gateway is no longer used, the MME/SGSN may remove the stored PDN gateway identifier if the PDN gateway storage flag indicates that the PDN gateway address for the specific PDN connection/PDP context is stored in the HSS.

Referring again to FIG. 2, if a determination is made that the HSS should be signaled, process 200 may transmit a PDN gateway identity to a home subscriber server in step 210. Process 200 may then set a flag in the database client to TRUE in step 212 indicating that the PDN gateway identity has been transmitted to the HSS.

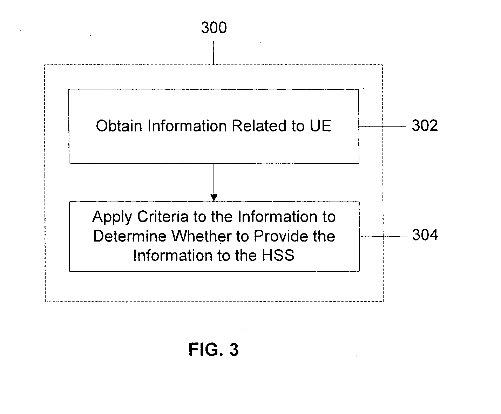

Referring now to FIG. 3, FIG. 3 is a flow chart illustrating a process 300 for determining whether to send a gateway identifier to an HSS after selecting a gateway. Process 300 may begin in step 302, where information related to a UE is obtained. Process 300, in step 304, applies criteria to the information obtained to determine whether to provide information pertaining to the UE to an HSS.

The criteria may include, for example, terminal/device identity, for example, international mobile equipment identity (IMEI), international mobile equipment identity software version (IMEISV), and UE capabilities, such as, for example, the capability to support multiple accesses. The criteria may also include, for example, UE location, a subscriber profile, whether the operator supports certain non-3GPP access technologies, whether the subscriber is permitted to use different access technologies, operator policies such as whether a roaming user is permitted to have a multi-access session continuity, and user/subscriber behavior and patterns. User/subscriber behavior and patterns may include, for example, whether the user/subscriber frequently uses non-3GPP access technologies. UE location may be used, for example, if UE is located in a vicinity of other accesses and is likely to change to another access technology-type. Subscriber profiles may be identified by, for example, user identities such as an international mobile subscriber identity (IMSI).

The above criteria may be used by an MME, SGSN, AAA server or any other entity that needs to update the HSS with the identity of a PDN gateway. It is to be understood that such criteria are, in general, policy decision related. Hence, actual policy or rule evaluations may be performed by a central policy function such as a Policy Decision Point (PDP) (e.g., an ADSF) and the result of the evaluation may be returned to the MME, SGSN or AAA, which then applies the returned policy decision.

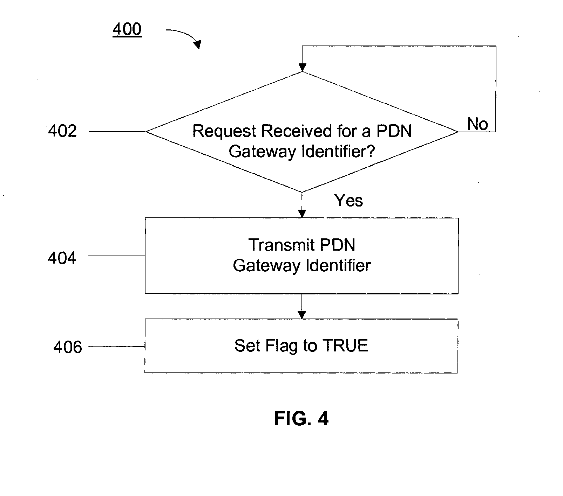

Referring now to FIG. 4, FIG. 4 is a flow chart illustrating a process 400 performed by a database client for reducing HSS signaling according to one embodiment of the invention. Process 400 may begin in step 402, where a determination is made regarding whether a PDN gateway identifier request has been received from an HSS. If a determination is made that a PDN gateway identifier request has not been received, process 400 may remain at step 402. If a determination is made that a PDN gateway identifier request has been received, process 400 may transmit a PDN gateway identifier to the HSS in step 406. Process 400 may then set a flag in the database client to TRUE in step 408 to indicate that the PDN gateway identifier has been transmitted to the HSS.

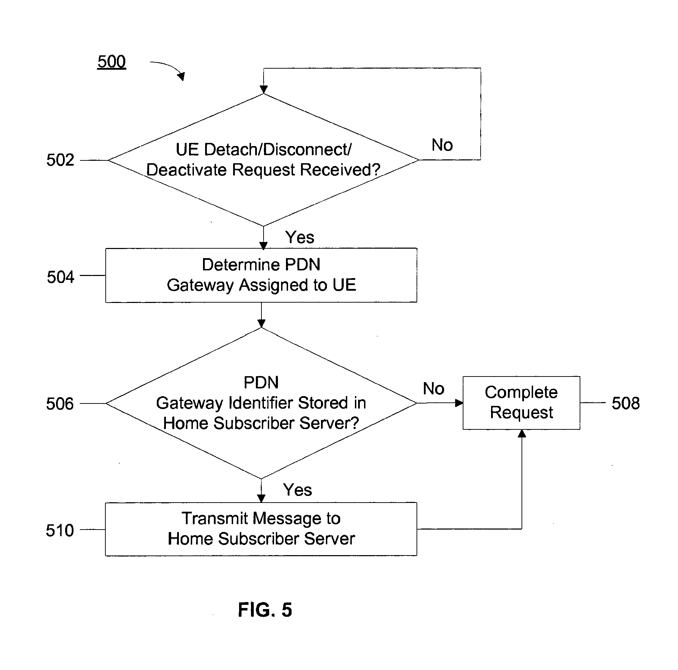

Referring now to FIG. 5, FIG. 5 is a flow chart illustrating a process 500 performed by a database client for reducing HSS signaling according to one embodiment of the invention. Process 500 may begin in step 502, where a determination is made regarding whether a detach/disconnect/deactivate request from user equipment (UE) has been received. If a determination is made that a request has not been received, process 500 may remain at step 502. If a determination is made that a request has been received, process 500 may determine a PDN gateway assigned to the UE in step 504.

In step 506, a determination may be made regarding whether the PDN gateway identifier associated with the PDN gateway assigned to the UE has been stored in the HSS. If a determination is made that the PDN gateway identifier has not been stored in the HSS, the request may be completed in step 508. If a determination is made that the PDN gateway identifier has been stored in the HSS, the database client may transmit a message to the HSS in step 510 indicating that the UE has requested to be detached (or disconnected or deactivated) (step 510). In this manner, the HSS is aware that the PDN gateway identifier stored in the HSS is no longer current. Process 500 may then continue to step 508 and complete the request.

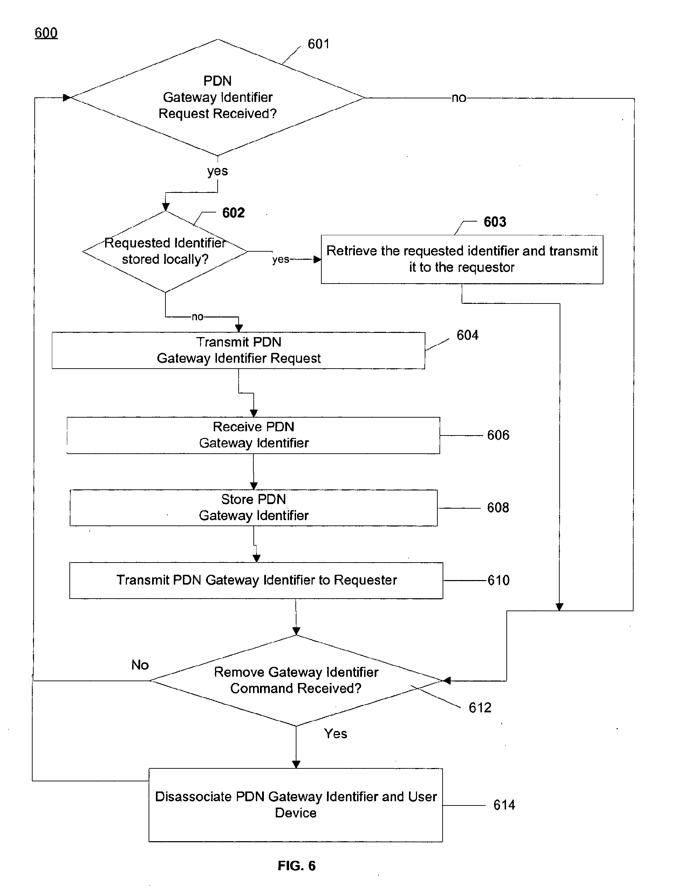

Referring now to FIG. 6, FIG. 6 is a flow chart illustrating a process 600 performed by an HSS according to one embodiment of the invention. Process 600 may begin in step 601, where a determination is made regarding whether a packet data network (PDN) gateway identifier request has been received from a database client. A PDN gateway identifier request may be transmitted from the database client (e.g., AAA server) to the HSS when a UE performs a handover from a 3GPP access technology to a non-3GPP access technology.

If a request has been received, the HSS determines whether the requested identifier is locally stored (step 602). If it is, then the HSS retrieves the identifier itself and transmits it to requesting database client (step 603). If it is not locally stored, the HSS may transmit a PDN gateway identifier request to a second database client (e.g., an MME) (step 604). In some embodiments, such a request may only be sent to such a database client if such client is registered with the HSS. In step 606, the HSS receives a PDN gateway identifier transmitted from the second database client in response to the request transmitted in step 604. In step 608, the PDN gateway identifier may be locally stored by the HSS. In step 610, the received PDN gateway identifier may be transmitted to the database client that requested the PDN gateway identifier.

In step 612, the HSS determines whether a remove gateway identifier command has been received. Such a command may include a gateway identifier and a UE identifier. If such a command has been received, the HSS may disassociate the gateway identifier with the identified UE (step 614).

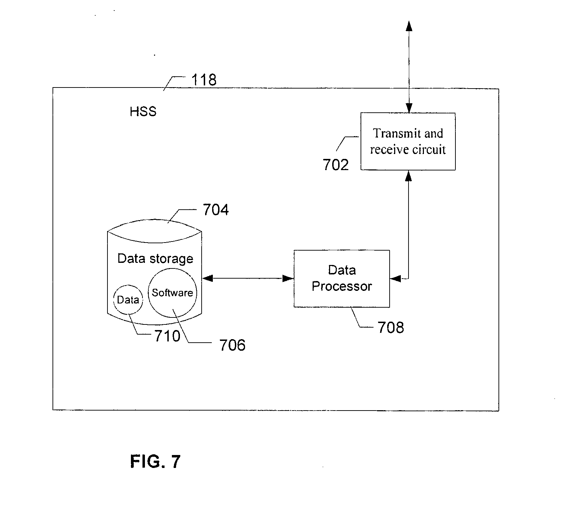

Referring now to FIG. 7, FIG. 7 is a functional block diagram illustrating an HSS 118 according to some embodiments of the invention. As shown in FIG. 7, HSS 122 may include a transmitting and receiving circuit 702 for transmitting data to and receiving data from a database client; a storage unit 704 (e.g., a non-volatile data storage) that stores software 706 for implementing the functions and features described above; and a processor 708 (e.g., a microprocessor) for executing software 706. Storage unit 704 may also store data 710 relating to use of HSS 118.

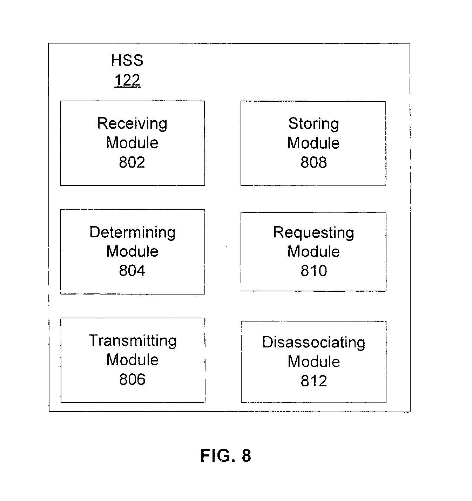

Referring now to FIG. 8, FIG. 8 is another functional block diagram illustrating HSS 122 according to one embodiment of the invention. As shown in FIG. 8, HSS 122 may include a receiving module 802. Receiving module 802 may be used to receive, for example, a PDN gateway identifier request and a PDN gateway identifier. HSS 122 may also include a determining module 804 that may determine, for example, whether a PDN gateway identifier request has been received and whether a removed gateway identifier command has been received.

A transmitting module 806 may be used to transmit a PDN gateway identifier to a requestor. A storing module 808 may be used to store the PDN gateway identifier in the HSS. A requesting module 810 may be used to request a PDN gateway identifier from a database client. A disassociating model 812 may be used to disassociate a PDN gateway identifier and a user device.

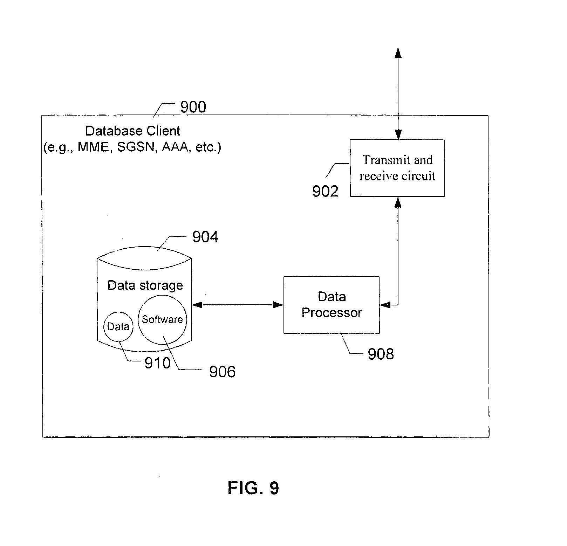

Referring now to FIG. 9, FIG. 9 is a functional block diagram illustrating a database client 900 according to some embodiments of the invention. Database client 900 may be, for example, a mobility management entity (MME), authentication authorization accounting (AAA) server, serving general packet radio service (GPRS) support node (SGSN) or other device. As shown in FIG. 9, Database client 900 may include a transmitting and receiving circuit 902 for transmitting data to and receiving data from an HSS; a storage unit 904 (e.g., a non-volatile data storage) that stores software 906 for implementing the functions and features described above; and a processor 908 (e.g., a microprocessor) for executing software 906. Storage unit 904 may also store data 910 relating to use of Database client 900.

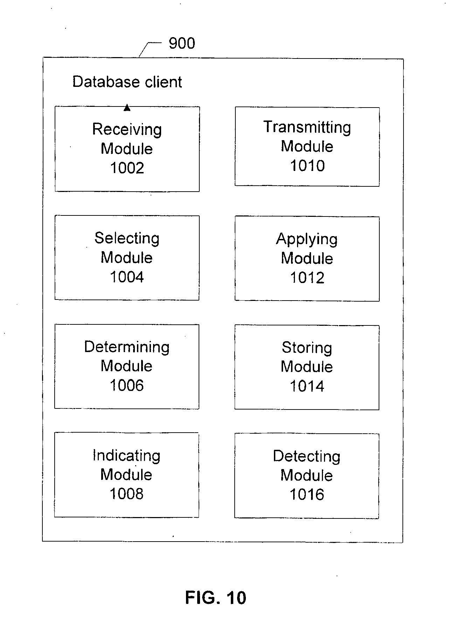

Referring now to FIG. 10, FIG. 10 is another functional block diagram illustrating the database client 900 according to one embodiment of the invention. The database client 900 may include a receiving module 1002 that receives, for example, a PDN gateway identifier request and a PDN gateway identifier. A selecting module 1004 may be used to, for example, select a PDN gateway. A determining module 1006 may be used to, for example, determine (1) whether a PDN gateway should be selected, (2) whether a PDN gateway identifier identifying the selected gateway should be transmitted to an HSS, (3) whether a PDN gateway identifier request has been received, (4) whether a user equipment detach/disconnect/deactivate request has been received, (5) whether a PDN gateway identifier has been stored in an HSS, etc.

An indicating module 1008 may be used to, for example, indicate whether a PDN gateway identifier has been transmitted to the HSS. A transmitting module 110 may be used, for example, to transmit a PDN gateway identifier to an HSS. A rule applying module 1012 may be used to apply one or more rules to determine whether a gateway identifier should be sent to an HSS. A detecting module 1016 may be used to detect a command or message has been received.

## Claims

1. A method of in an apparatus for reducing central database signalling **characterized by**:
selecting a gateway in response to an event;
in response to selecting the gateway, determining whether to transmit to a central database a gateway identifier identifying the selected gateway; and
indicating whether the gateway identifier has been transmitted to the central database.

2. The method of claim 1, wherein the step of indicating comprises setting a flag.

3. The method of claim 1, wherein the gateway comprises a packet data network gateway (112,118).

4. The method of claim 1, wherein the central database comprises a home subscriber server (122).

5. The method of claim 1, wherein the event comprises any one of an attach procedure and a connection request.

6. The method of claim 1, further comprising receiving criteria for determining whether to transmit the gateway identifier.

7. The method of claim 6, wherein the criteria comprises any one of: a device identity, user equipment capability, user equipment location, subscriber profile, network configuration depending on operator policy, and user behaviour.

8. The method of claim 6, wherein the step of determining whether to transmit a gateway identifier comprises applying the criteria.

9. An apparatus for reducing central database signalling **characterized by**:
a selecting module (1004) configured to select a gateway in response to an event;
a transmitting determining module (1006,1010) configured to determine whether to transmit to a central database a gateway identifier identifying the selected gateway; and
an indicating module (1008) configured to store information that indicates whether the gateway identifier has been transmitted to the central database.

10. The apparatus of claim 9, wherein the indicating module comprises a flag setting module.

11. The apparatus of claim 9, wherein the gateway comprises a packet data network gateway (112,118).

12. The apparatus of claim 9, wherein the central database comprises a home subscriber server (122).

13. The apparatus of claim 9, wherein the event comprises any one of an attach procedure and a connection request.

14. A method in a network node for reducing central database signalling **characterized by**:
receiving a request from a central database;
transmitting a gateway identifier to the central database in response to the request, wherein the gateway identifier identifies a gateway that provides a service to a user device;
storing information indicating that the gateway identifier has been transmitted to the central database.

15. The method of claim 14, further comprising detecting a detach event associated with the user device.

16. The method of claim 15, further comprising determining whether the gateway identifier has been transmitted to the central database in response to the detach event.

17. A network node, **characterized by**:
a request receiving module (802) configured to receive a request from a central database;
a transmitting module (806) configured to transmit a gateway identifier to the central database in response to the request, wherein the gateway identifier identifies a gateway in communication with a user device;
a storing module (808) for storing an indicator indicating that the gateway identifier has been transmitted from the system to the central database.

18. The network node of claim 17, further comprising a detecting module configured to detect a detach event associated with the user device.

19. The network node of claim 18, further comprising a determining module (804) configured to determine whether the gateway identifier has been transmitted to the central database in response to the detach event.

20. The network node of claim 19, wherein the transmitting module (806) is configured to transmit a message to the central database if a determination is made that the gateway identifier has been transmitted to the central database.

## Patentansprüche

1. Verfahren in einer Vorrichtung zum Reduzieren von Zentraldatenbank-Signalisierung, **gekennzeichnet durch**:
Auswählen eines Gateways als Antwort auf ein Ereignis;
als Antwort auf die Auswahl des Gateways bestimmen, ob an eine Zentraldatenbank eine Gateway-Kennung zu übertragen ist, die das ausgewählte Gateway identifiziert; und
Anzeigen, ob die Gateway-Kennung an die Zentraldatenbank übertragen wurde.

2. Verfahren nach Anspruch 1, worin der Schritt des Anzeigens das Setzen eines Flags umfasst.

3. Verfahren nach Anspruch 1, worin das Gateway ein Paketdatennetz-Gateway (112, 118) umfasst.

4. Verfahren nach Anspruch 1, worin die Zentraldatenbank einen Heimteilnehmer-Server (122) umfasst.

5. Verfahren nach Anspruch 1, worin das Ereignis eins von Folgenden umfasst: eine Anmeldeprozedur und eine Verbindungsanforderung.

6. Verfahren nach Anspruch 1, außerdem das Empfangen von Kriterien zum Bestimmen umfassend, ob die Gateway-Kennung zu übertragen ist.

7. Verfahren nach Anspruch 6, worin die Kriterien eins von Folgenden umfassen; eine Einrichtungskennung, Benutzergerättauglichkeit, Benutzergerätstandort, Teilnehmerprofil, von Betreiber-Policy abhängige Netzkonfiguration und Benutzerverhalten.

8. Verfahren nach Anspruch 6, worin der Schritt des Bestimmens, ob eine Gateway-Kennung zu übertragen ist, das Anwenden der Kriterien umfasst.

9. Vorrichtung zum Reduzieren von Zentraldatenbank-Signalisierung, **gekennzeichnet durch**
ein Auswahlmodul (1004), das dazu konfiguriert ist, ein Gateway als Antwort auf ein Ereignis auszuwählen;
ein übertragendes Bestimmungsmodul (1006, 1010), konfiguriert zum Bestimmen, ob eine das ausgewählte Gateway identifizierende Gateway-Kennung an eine Zentraldatenbank zu übertragen ist; und
ein Anzeigemodul (1008), konfiguriert zum Speichern von Information, die anzeigt, ob die Gateway-Kennung an die Zentraldatenbank übertragen wurde.

10. Vorrichtung nach Anspruch 9, worin das Anzeigemodul ein Modul zum Flag-Setzen umfasst.

11. Vorrichtung nach Anspruch 9, worin das Gateway ein Paketdatennetz-Gateway (112, 118) umfasst.

12. Vorrichtung nach Anspruch 9, worin die Zentraldatenbank einen Heimteilnehmer-Server (122) umfasst.

13. Vorrichtung nach Anspruch 9, worin das Ereignis eins von Folgenden umfasst: eine Anmeldeprozedur und eine Verbindungsanforderung.

14. Verfahren in einem Netzknoten zum Reduzieren von Zentraldatenbank-Signalisierung, **gekennzeichnet durch**:
Empfangen einer Anforderung von einer Zentraldatenbank;
Übertragen einer Gateway-Kennung an die Zentraldatenbank als Antwort auf die Anforderung, worin die Gateway-Kennung ein Gateway identifiziert, das einer Benutzereinrichtung einen Dienst bereitstellt;
Speichern von Information, die anzeigt, dass die Gateway-Kennung an die Zentraldatenbank übertragen wurde.

15. Verfahren nach Anspruch 14, außerdem das Detektieren eines mit der Benutzereinrichtung assoziierten Abmeldeereignisses umfassend.

16. Verfahren nach Anspruch 15, außerdem das Bestimmen umfassend, ob die Gateway-Kennung als Antwort auf das Abmeldeereignis an die Zentraldatenbank übertragen wurde.

17. Netzknoten, **gekennzeichnet durch**:
ein Anforderungsempfangsmodul (802), konfiguriert zum Empfangen einer Anforderung von einer Zentraldatenbank,
ein Übertragungsmodul (806), konfiguriert zum Übertragen einer Gateway-Kennung an die Zentraldatenbank als Antwort auf die Anforderung, worin die Gateway-Kennung ein Gateway in Kommunikation mit einer Benutzereinrichtung identifiziert;
ein Speichermodul (808) zum Speichern eines Anzeigers, der anzeigt, dass die Gateway-Kennung vom System an die Zentraldatenbank übertragen wurde.

18. Netzknoten nach Anspruch 17, außerdem ein Detektionsmodul umfassend, konfiguriert zum Detektieren eines mit der Benutzereinrichtung assoziierten Abmeldeereignisses.

19. Netzknoten nach Anspruch 18, außerdem ein Bestimmungsmodul (804) umfassend, konfiguriert zum Bestimmen, ob die Gateway-Kennung als Antwort auf das Abmeldeereignis an die Zentraldatenbank übertragen wurde.

20. Netzknoten nach Anspruch 19, worin das Übertragungsmodul (806) dazu konfiguriert ist, eine Nachricht an die Zentraldatenbank zu übertragen, falls eine Bestimmung erfolgt, dass die Gateway-Kennung an die Zentraldatenbank übertragen wurde.

## Revendications

1. Procédé mis en oeuvre dans un appareil pour réduire une signalisation de base de données centrale, **caractérisé en ce qu'**il consiste à :
sélectionner une passerelle en réponse à un événement ;
en réponse à la sélection de la passerelle, déterminer s'il convient de transmettre, à une base de données centrale, un identifiant de passerelle identifiant la passerelle sélectionnée ; et
indiquer si l'identifiant de passerelle a été transmis à la base de données centrale.

2. Procédé selon la revendication 1, dans lequel l'étape d'indication consiste à définir un fanion.

3. Procédé selon la revendication 1, dans lequel la passerelle comprend une passerelle de réseau de données en paquets (112, 118).

4. Procédé selon la revendication 1, dans lequel la base de données centrale comprend un serveur d'abonné résidentiel (122).

5. Procédé selon la revendication 1, dans lequel l'événement comprend l'une quelconque parmi une procédure de rattachement et une demande de connexion.

6. Procédé selon la revendication 1, consistant en outre à recevoir des critères en vue de déterminer s'il convient de transmettre l'identifiant de passerelle.

7. Procédé selon la revendication 6, dans lequel les critères comprennent l'un quelconque parmi les suivants : une identité de dispositif, une capacité d'équipement d'utilisateur, un emplacement d'équipement d'utilisateur, un profil d'abonné, une configuration de réseau dépendant d'une politique d'opérateur, et un comportement d'utilisateur.

8. Procédé selon la revendication 6, dans lequel l'étape consistant à déterminer s'il convient de transmettre un identifiant de passerelle comprend l'application des critères.

9. Appareil destiné à réduire une signalisation de base de données centrale, **caractérisé par** :
un module de sélection (1004) configuré de manière à sélectionner une passerelle en réponse à un événement ;
un module de détermination de transmission (1006, 1010) configuré de manière à déterminer s'il convient de transmettre, à une base de données centrale, un identifiant de passerelle identifiant la passerelle sélectionnée ; et
un module d'indication (1008) configuré de manière à stocker des informations indiquant si l'identifiant de passerelle a été transmis à la base de données centrale.

10. Appareil selon la revendication 9, dans lequel le module d'indication comprend un module de définition de fanion.

11. Appareil selon la revendication 9, dans lequel la passerelle comprend une passerelle de réseau de données en paquets (112, 118).

12. Appareil selon la revendication 9, dans lequel la base de données centrale comprend un serveur d'abonné résidentiel (122).

13. Appareil selon la revendication 9, dans lequel l'événement comprend l'une quelconque parmi une procédure de rattachement et une demande de connexion.

14. Procédé mis en oeuvre dans un noeud de réseau en vue de réduire une signalisation de base de données centrale, **caractérisé en ce qu'**il consiste à :
recevoir une demande en provenance d'une base de données centrale ;
transmettre un identifiant de passerelle à la base de données centrale en réponse à la demande, dans lequel l'identifiant de passerelle identifie une passerelle qui fournit un service à un dispositif d'utilisateur ;
stocker des informations indiquant que l'identifiant de passerelle a été transmis à la base de données centrale.

15. Procédé selon la revendication 14, consistant en outre à détecter un événement de détachement associé au dispositif d'utilisateur.

16. Procédé selon la revendication 15, consistant en outre à déterminer si l'identifiant de passerelle a été transmis à la base de données centrale en réponse à l'événement de détachement.

17. Noeud de réseau, **caractérisé par** :
un module de réception de demande (802) configuré de manière à recevoir une demande provenant d'une base de données centrale ;
un module de transmission (806) configuré de manière à transmettre un identifiant de passerelle à la base de données centrale en réponse à la demande, dans lequel l'identifiant de passerelle identifie une passerelle en communication avec un dispositif d'utilisateur ;
un module de stockage (808) destiné à stocker un indicateur indiquant que l'identifiant de passerelle a été transmis du système à la base de données centrale.

18. Noeud de réseau selon la revendication 17, comprenant en outre un module de détection configuré de manière à détecter un événement de détachement associé au dispositif d'utilisateur.

19. Noeud de réseau selon la revendication 18, comprenant en outre un module de détermination (804) configuré de manière à déterminer si l'identifiant de passerelle a été transmis à la base de données centrale en réponse à l'événement de détachement.

20. Noeud de réseau selon la revendication 19, dans lequel le module de transmission (806) est configuré de manière à transmettre un message à la base de données centrale s'il a été déterminé que l'identifiant de passerelle a été transmis à la base de données centrale.
